(19) Europäisches Patentamt
European Patent Office
Office européen des brevets

(11) **EP 2 030 043 B1**

(12) **EUROPÄISCHE PATENTSCHRIFT**

(45) Veröffentlichungstag und Bekanntmachung des Hinweises auf die Patenterteilung:
**31.07.2013 Patentblatt 2013/31**

(21) Anmeldenummer: **07764684.2**

(22) Anmeldetag: **16.06.2007**

(51) Int Cl.:
*G01S 13/34* (2006.01)        *G01S 13/58* (2006.01)
*G01S 13/93* (2006.01)

(86) Internationale Anmeldenummer:
**PCT/EP2007/005315**

(87) Internationale Veröffentlichungsnummer:
**WO 2007/147533 (27.12.2007 Gazette 2007/52)**

(54) **KRAFTFAHRZEUG-RADARSYSTEM UND VERFAHREN ZUR BESTIMMUNG VON GESCHWINDIGKEITEN UND ENTFERNUNGEN VON OBJEKTEN**

MOTOR VEHICLE RADAR SYSTEM, AND METHOD FOR DETERMINING SPEEDS AND DISTANCES OF OBJECTS

SYSTÈME DE RADAR DE VÉHICULE ET PROCÉDÉ DE DÉTERMINATION DE VITESSES ET DE DISTANCES D'OBJETS

(84) Benannte Vertragsstaaten:
**DE FR GB SE**

(30) Priorität: **21.06.2006 DE 102006028465**

(43) Veröffentlichungstag der Anmeldung:
**04.03.2009 Patentblatt 2009/10**

(73) Patentinhaber: **Valeo Schalter und Sensoren GmbH**
**74321 Bietigheim-Bissingen (DE)**

(72) Erfinder:
• **LÜBBERT, Urs**
**74321 Bietigheim-Bissingen (DE)**
• **HABERLAND, Udo**
**71088 Holzgerlingen (DE)**

(56) Entgegenhaltungen:
EP-A- 1 548 458        WO-A-2005/124391
WO-A-2006/034888      DE-A1- 10 355 796
DE-A1- 19 648 203      DE-A1- 19 714 570
DE-A1- 19 922 411

**Beschreibung**

Die Erfindung betrifft ein Verfahren zur Bestimmung von Geschwindigkeiten und Entfernungen von Objekten relativ zu einem Radarsystem eines Kraftfahrzeugs, wobei ein Erfassungsbereich des Radarsystems in wenigstens zwei Teilbereiche aufgeteilt ist, der Erfassungsbereich in aufeinander folgenden Messzyklen auf reflektierende Objekte untersucht wird, wobei in einem Messzyklus empfangene Radarsignale nach Teilbereichen getrennt verarbeitet werden und verarbeitete Signale zu einem nach Raumrichtungen differenzierten Gesamtergebnis zusammengefügt werden. Die Erfindung betrifft ferner ein Radarsystem, , das zur Durchführung des Verfahrens eingerichtet ist.

Ein solches Verfahren und ein solches Radarsystem ist jeweils aus der DE 696 12 252 T2 bekannt.

Bei Straßen-Kraftfahrzeugen werden Radarsysteme zur Überwachung der Fahrzeugumgebung eingesetzt, wobei Anwendungen wie Einparkhilfe, Totwinkelüberwachung, Spurwechselassistenz, Türöffnungsassistenz, eine Unfall-Antizipierung (pre-crashsensing) für eine Airbag-Auslösung, Gurtstraffung, Überrollbügel-Aktivierung, Start/Stopp-Betrieb, Stop and follow-Betrieb oder Fahrbetrieb mit Abstandsüberwachung und/oder Abstandsregelung (Cruise Control Unterstützung) in Frage kommen.

Im Umfeld der Fahrzeuge sind typischerweise mehrere Objekte und räumlich ausgedehnte Objekte (Fahrzeuge, Leitplanken, Brücken) vorhanden, sodass in der Regel mehrere Reflexionsstellen in der gleichen Entfernungszelle auftreten. Um dem Fahrer oder einem Fahrerassistenzsystem eine Einschätzung der Situation zu ermöglichen, muss zusätzlich zur Entfernung auch die Geschwindigkeit und unter Umständen auch die Winkelposition reflektierender oder streuender Objekte bestimmt werden. Eine Unterdrückung von Infrastruktur, also zum Beispiel von ortsfesten Objekten wie Leitplanken an Fahrbahnrändern, stellt eine weitere wichtige Anforderung an ein Kraftfahrzeug-Radarsystem dar.

Das eingangs genannte Kraftfahrzeug-Radarsystem verwendet eine Segmentierung eines Erfassungsbereiches des Radarsystems durch eine sequenziell erfolgende Überdeckung mit mehreren Teilbereichen, denen jeweils ein Winkel-Ausschnitt aus dem Erfassungsbereich zugeordnet ist. Die Segmentierung erfolgt mit Hilfe von mehreren räumlich getrennten Empfangsantennen, die jeweils paarweise zusammengeschaltet werden können. Durch Kombination verschiedener Empfangsantennen des Radarsystems werden bei der DE 696 12 252 verschiedene Teilbereiche erzeugt, die zusammen einen vergleichsweise großen azimuthalen Erfassungsbereich ergeben.

Innerhalb eines Teilbereichs wird ein FMCW-Verfahren verwendet (FMCW = frequency modulated continuous wave). Dabei wird die Frequenz der von dem Radarsystem emittierten Radarsignale rampenförmig vergrößert und wieder verringert. Jede einzelne Frequenzrampe wird auch als chirp bezeichnet. An einem Objekt reflektierte und anschließend vom Radarsystem empfangene Radarsignale werden im Radarsystem mit dem momentanen Sendesignal in das Basisband heruntergemischt. Für ein Objekt im Erfassungsbereich des Radars ergibt sich im Basisband-Empfangssignal eine harmonische Schwingung mit einer Frequenz, die der Differenz der momentanen Sendesignal-Frequenz und Empfangssignal-Frequenz (vor der Mischung) entspricht. Da zwischen dem Senden und dem Empfang der Radarsignale eine Signallaufzeit vergeht, die vom Abstand r des Radarsystems von dem reflektierenden Objekt abhängt, bildet sich der Abstand r in dieser Differenzfrequenz ab. Aufgrund des Dopplereffektes bildet sich zusätzlich die radiale, also die in Richtung einer Verbindungslinie zwischen Radarsystem und reflektierendem Objekt vorliegende Relativgeschwindigkeit vr in der Differenzfrequenz f ab. Dabei erfüllen die beiden Abhängigkeiten die lineare Gleichung

$$f = a * r + b * vr$$

mit Koeffizienten a und b, die von den Chirp-Parametern Sende-Startfrequenz f0, Chirplänge TC und Frequenzänderung dfC abhängen. Die Werte der Differenzfrequenz f werden gewöhnlich durch Fouriertransformation und Schwellenwertdetektion im Frequenzbereich bestimmt.

Durch den linearen Zusammenhang f =a * r + b * vr kann jeder gemessene Wert der Differenzfrequenz f in einem r, vr-Diagramm als Gerade dargestellt werden, wobei die Steigung der Geraden von den Koeffizienten a, b und damit von den genannten chirp-Parametern abhängt. Bei einer rampenförmigen Erhöhung der Frequenz (up-chirp) ergibt sich eine andere Gerade als bei der rampenförmigen Verringerung der Frequenz (down-chirp). Der Schnittpunkt beider Geraden liefert den gesuchten Abstand und die gesuchte Relativgeschwindigkeit eines einzelnen reflektierenden Objekts. Ein lineares Gleichungssystem beschreibt die Beziehung zwischen den Objekt-Parametern r und vr und den ermittelten Differenzfrequenzen. Dies wird zum Beispiel bereits durch die DE 2 305 941 beschrieben.

In Situationen mit mehreren reflektierenden Objekten steigt die Zahl der Schnittpunkte mit der Zahl der reflektierenden Objekte an. Jedes weitere Objekt liefert neben dem aussagekräftigen Schnittpunkt seiner zwei zugehörigen Geraden weitere Schnittpunkte mit Geraden, die zu den anderen Objekten gehören. Da diese weiteren Schnittpunkte kein reales Objekt charakterisieren, werden sie auch als Geisterziele bezeichnet.

In solchen Situationen mit n Objekten ergibt sich die Notwendigkeit, die aussagekräftigen Schnittpunkte, also die r, vr -Kombinationen realer Objekte zu validieren und damit von den r, vr Kombinationen der Geisterziele zu trennen.

Für eine solche Validierung ist aus der DE 42 44 608 A1 bekannt, weitere Messungen durchzuführen, die zusätzliche Zusammenhänge zwischen den Objekt-Parametern r und vr und den Messwerten für die Validierung liefern. Aus der DE 199 22 411 A1 ist in diesem Zusammenhang eine Verwendung weiterer Frequenzrampen mit unterschiedlichen Steigungen bekannt. In diesem Fall wird überprüft, ob für eine physikalisch mögliche r, vr - Kombination in den weiteren Frequenzmessungen die erwarteten Frequenzen gemessen werden. Dies wird mit Nearest Neighbour und Gate - Verfahren überprüft. Eine r, vr - Kombination wird validiert, wenn eine Differenz zwischen einer erwarteten Frequenz und der nächstgelegenen gemessenen Frequenz kleiner als ein vorbestimmter Schwellenwert ist. Anschließend werden die validierten r, vr - Kombinationen im sogenannte Zielverfolger (target-tracker) weiterverarbeitet. Dabei erkennt und unterdrückt der tracker einzelne falsche r, vr-Kombinationen (also Geisterziele) durch einen zusätzlichen Validierungs-Algorithmus.

Bei der DE 696 12 252 T4 kann zwischen den einzelnen Empfangsantennenkombinationen, mit denen Teilbereiche eines größeren Erfassungsbereichs ausgewählt werden, umgeschaltet werden. Um Objekte in dem gesamten Erfassungsbereich zu erfassen, müssen die einzelnen Teilbereiche sequenziell ausgewählt werden. Die Dauer eines einzelnen Messzyklusses, mit dem der Erfassungsbereich einmal auf Objekte überprüft wird, wird bestimmt durch das Produkt der pro Teilbereich erforderlichen Messdauer und der Zahl der Teilbereiche.

Bei den oben genannten Anwendungen für Straßen-Kraftfahrzeuge wird unter anderem eine hohe up date Rate und damit eine kurze Zeitdauer eines Messzyklusses in der Größenordnung zwischen 10 ms bis 100ms gefordert. Andererseits kann die Dopplerfrequenz und damit die Geschwindigkeit eines Objektes umso genauer bestimmt werden, je länger die Frequenzrampen einzelner chirps sind. Je mehr verschiedene chirps zur Messung und Validierung benutzt werden, desto zuverlässiger kann die Validierung von Abständen und Geschwindigkeiten realer Objekte erfolgen, um diese von Geisterzielen zu unterscheiden.

Aus den Anforderungen einer hohen up date Rate und der Genauigkeit der Messungen und Zuverlässigkeit der Validierung ergibt sich damit ein Zielkonflikt.

Aus der WO 2006/034 888 ist bekannt, die Teilbereiche zeitgleich auszulesen und die Empfangssignale unterschiedliches Meßzyklen mit unterschiedlichen FMCW-Rampen im r,v-Diagramm zu validieren und damit Geisterziele auszuschließen.

Vor diesem Hintergrund besteht die Aufgabe der Erfindung in der Angabe eines Verfahrens und eines Radarsystems der jeweils eingangs genannten Art, mit denen sich eine hohe Messgenauigkeit und zuverlässige Unterscheidung realer Objekte von Geisterzielen mit einer hohen up date Rate bei Sequentieller Auslese der Teilbereiche erzielen lässt.

Diese Aufgabe wird bei einem Verfahren der eingangs genannten Art dadurch gelöst, dass aus in einem ersten Messzyklus empfangenen Signalen Hypothesen für die Entfernung und Geschwindigkeit reflektierender Objekte gebildet werden und die Hypothesen in Abhängigkeit von in wenigstens einem weiteren Messzyklus empfangenen Signalen validiert werden. Ferner wird diese Aufgabe bei einem Radarsystem der eingangs genannten Art durch die kennzeichnenden Merkmale des Anspruchs 10 gelöst.

Mit anderen Worten: Die Erfindung erlaubt die Bildung einer Hypothese dazu, ob es sich bei einem Schnittpunkt von zwei Geraden um Parameter eines realen Objektes oder um ein Geisterziel handelt, durch ein einzelnes Paar von Chirps für einen Teilbereich eines beliebigen ersten Messzyklusses. Sie erlaubt ferner ein Validieren (Bestätigen) oder Verwerfen der Hypothese durch Auswerten von Messungen in wenigstens einem späteren Messzyklus. Als Folge kann der erste Messzyklus bereits beendet werden, bevor die Messergebnisse oder die daraus abgeleiteten Hypothesen endgültig validiert oder verworfen werden. Im Ergebnis kann dadurch die Dauer der Einzel-Messzyklen verringert werden, was eine höhere Aktualisierungsgeschwindigkeit, also eine höhere up date Rate erlaubt. Die höhere up date Rate wird ohne Einbußen bei der Zuverlässigkeit der Validierung erzielt, da die Zahl der für eine Validierung verwendeten chirps nicht verringert werden muss. Es werden lediglich chirps aus verschiedenen Messzyklen für die Validierung verwendet. Im Ergebnis erlaubt die Erfindung sowohl in ihren Verfahrensaspekten als auch in ihren Vorrichtungsaspekten eine Entschärfung des genannten Zielkonfliktes.

Dabei erfolgt die nach Teilbereichen getrennte Verarbeitung in einer Ausgestaltung dadurch, dass das Radarsystem eine Teilbereiche definierende Überdeckung einer Sendekeule und eines Empfangswinkelbereiches in einem Messzyklus sequenziell in verschiedene Raumrichtungen richtet und die Verarbeitung empfangener Radarsignale sequenziell erfolgt.

Durch diese Ausgestaltung erfolgt die nach Teilbereichen getrennte Verarbeitung der Radarsignale zeitlich getrennt. Durch die zeitliche Trennung kann die Verarbeitung jeweils in demselben Empfangskanal erfolgen, so dass diese Ausgestaltung nur einen Empfangskanal für die Radarsignalverarbeitung erfordert.

In einer alternativen Ausgestaltung erfolgt die nach Teilbereichen getrennte Verarbeitung dadurch, dass das Radarsystem gleichzeitig verschiedene Teilbereiche definierende Überdeckungen wenigstens einer Sendekeule mit wenigstens zwei Empfangswinkelbereichen oder wenigstens eines Empfangswinkelbereiches mit wenigstens zwei Sendekeulen in verschiedene Raumrichtungen richtet wobei für einen Teilbereich (d.h. für eine Überdeckung) Signale aus einem anderen Empfangssignal-Frequenzbereich verarbeitet werden als für einen anderen Teilbereich.

Diese Ausgestaltung erlaubt eine gleichzeitige Messung in mehreren Teilbereichen, was die up date rate und Validierungsgeschwindigkeit weiter erhöht. Die gleichzeitige Signalverarbeitung erfordert jedoch mehrere Empfangskanäle und damit einen höheren technischen Vorrichtungsaufwand.

Bevorzugt ist auch, dass die Hypothesen durch ein LFMCW-Verfahren (LFMCW = linear frequency modulated continuous wave) gebildet werden, bei dem pro Überdeckung zwei Frequenzrampen mit unterschiedlicher Steigung verwendet werden.

Durch die Verwendung dieser beiden Frequenzrampen erlaubt diese Ausgestaltung die Bildung einer Hypothese durch Ermitteln der Schnittpunkte resultierender Geraden bei geringer erforderlicher Messzeit für einen Teilbereich. Auch dies trägt zu einer erwünscht hohen Aktualisierungsrate bei.

Eine weitere Ausgestaltung zeichnet sich dadurch aus, dass zur Messung und Validierung wenigstens vier verschiedene Frequenzrampen benutzt werden, von denen jeweils zwei in einem von zwei verschiedenen Messzyklen liegen. Ein erster Messzyklus dient zur Messung, und ein zweiter Messzyklus dient zur Validierung. Um eine hohe up date Rate zu erzielen, können die Ergebnisse aus einem Messzyklus zur Validierung einer Messung aus einem vorhergehenden Messzyklus und/oder als Messwerte verwendet werden, die noch durch einen nachfolgenden Messzyklus zu validieren sind. Auf diese Weise wird eine hohe up date Rate erzielt.

Alternativ oder ergänzend kann die Validierung auch durch Beobachtung und Auswertung von Veränderungen von Paaren festgestellter Kombinationen von Entfernungen und Geschwindigkeiten von Messzyklus zu Messzyklus erfolgen. Dabei wird die Geschwindigkeit ergänzend durch ein range rate - Verfahren bestimmt, bei dem die Änderung eines Paares aus je einem Wert für den Abstand r und einem Wert für die Geschwindigkeit vr zwischen zwei Messzyklen ermittelt wird. Bei einem realen Objekt muss insbesondere die Änderung des Abstandes nach einer Normierung auf den zeitlichen Abstand der Messzyklen der Geschwindigkeit vr entsprechen, die sich aus der Differenzfrequenz ergibt. Dazu ist eine Verwendung von Frequenzrampen mit gleichem Vorzeichen aber unterschiedlichem Betrag der Steigung nicht zwingend erforderlich.

Ferner hat es sich als zweckmäßig erwiesen, in aufeinander folgenden Messzyklen abwechselnd ein erstes Paar von Frequenzrampen und ein zweites Paar von Frequenzrampen für jeweils gleiche Überdeckungen zu verwenden. Dies trägt zu einer hohen up date Rate bei und erlaubt in Verbindung mit unterschiedlichen Steigungen eine zuverlässige Validierung.

Bevorzugt ist auch, dass die jeweils vier Frequenzmessungen von zwei aufeinander folgenden Messzyklen zur Hypothesen-Bildung und Hypothesen-Validierung verwendet werden, wobei die ersten beiden Frequenzmessungen zur Hypothesenbildung und die weiteren beiden Frequenzmessungen zur Validierung benutzt werden. Ein Paar von Frequenzmessungen kann dabei sowohl zur Validierung einer vorher gebildeten Hypothese als auch zur Bildung einer Hypothese benutzt werden, die in einem späteren Messzyklus noch zu validieren ist.

Da die Zuverlässigkeit der Validierung mit der Zahl der verwendeten Chirps steigt, werden in einer weiteren Ausgestaltung zwei Frequenzen, die in einem ersten Messzyklus gemessen werden, zur Hypothesen-Bildung verwendet und Frequenzen, die in mehr als einem weiteren Messzyklus gebildet werden, zur Validierung verwendet.

Weitere Vorteile ergeben sich aus der Beschreibung und den beigefügten Figuren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Zeichnungen

Ausführungsbeispiele der Erfindung sind in den Zeichnungen dargestellt und werden in der nachfolgenden Beschreibung näher erläutert. Es zeigen, jeweils in schematischer Form:

Fig. 1    ein Kraftfahrzeug mit einem Erfassungsbereich eines Radarsystems;

Fig. 2    eine Frequenzmodulation, wie sie bei einer Ausgestaltung eines erfindungsgemäßen Verfahrens verwendet wird;

Fig. 3    eine Auftragung von Ergebnissen einer Differenzfrequenzerfassung in einem Abstands-Relativgeschwindigkeits-Diagramm;

Fig. 4    eine erste Ausgestaltung zur Erzeugung von Teilbereichen eines Erfassungsbereichs;

Fig. 5    eine zweite Ausgestaltung zur Erzeugung von Teilbereichen;

Fig. 6    eine dritte Ausgestaltung zur Bildung von Teilbereichen;

Fig. 7    eine erste Ausgestaltung eines Radarsystems;

Fig. 8    eine zweite Ausgestaltung eines Radarsystems; und

Fig. 9    ein Flussdiagramm als Ausführungsbeispiel eines erfindungsgemäßen Verfahrens.

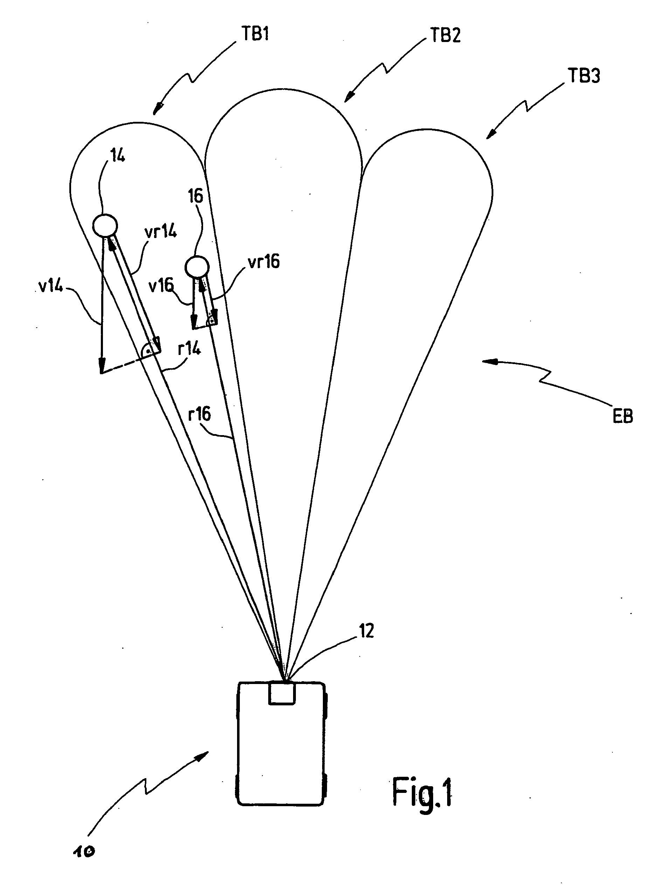

Fig. 1 zeigt ein Kraftfahrzeug 10 mit einem Kraftfahrzeug-Radarsystem 12, das Radialkomponenten vr14,- vr16 von Geschwindigkeiten v14, v16 und Entfernungen r14, r16 von Objekten 14, 16 relativ zu dem Kraftfahrzeug 10 bestimmt. Dabei ist das Radarsystem 12 dazu eingerichtet, einen in N = 3 Teilbereiche TB1, TB2, TB aufgeteilten Erfassungsbereich EB zu verwenden. Auch andere Werte N größer oder gleich 2 sind möglich. Jeder Teilbereich TB1, TB2, TB3 wird als Überdeckung einer Sendekeule und eines Empfangswinkelbereichs realisiert.

Die Überdeckungen weisen in verschiedene Raumrichtungen und werden in einer ersten Ausgestaltung in einem Messzyklus sequenziell aktiviert, so dass das Radarsystem 12 den Erfassungsbereich EB abschnittsweise auf reflektierende Objekte 14, 16 untersucht. Jede Untersuchung in einem der Teilbereiche wird im Folgenden auch als Einzelmessung bezeichnet. So wie die Teilbereiche TB1, TB2, TB3 in der Summe den Erfassungsbereich EB ergeben, ergibt sich die Dauer eines Messzyklusses als Summe der Zeitdauern der Einzelmessungen in den Teilbereichen des Erfassungsbereiches EB.

Nach einer solchen Untersuchung sämtlicher Teilbereiche TB1, TB2 wird jeweils ein neuer Messzyklus durchgeführt. In einem Messzyklus MZ empfangene vom Radarsystem 12 empfangene Radarsignale werden nach Teilbereichen TB1, TB2, TB3 getrennt verarbeitet und verarbeitete Signale zu einem nach Raumrichtungen differenzierten Gesamtergebnis zusammengefügt. Das Gesamtergebnis wird zum Beispiel dem Fahrer des Kraftfahrzeugs 10 durch eine Bildschirmdarstellung angezeigt. Alternativ oder ergänzend wird das Gesamtergebnis im Rahmen einer oder mehrerer der eingangs genannten Anwendungsbeispiele weiter verwendet, zum Beispiel zur Abstandsregelung.

Das Radarsystem 12 ist ferner dazu eingerichtet, aus in einem ersten Messzyklus empfangenen Signalen Hypothesen für die Entfernung r14, r16 und Geschwindigkeit vr14, vr16 reflektierender Objekte 14, 16 zu bilden und die Hypothesen in Abhängigkeit von in wenigstens einem weiteren Messzyklus empfangenen Signalen zu validieren.

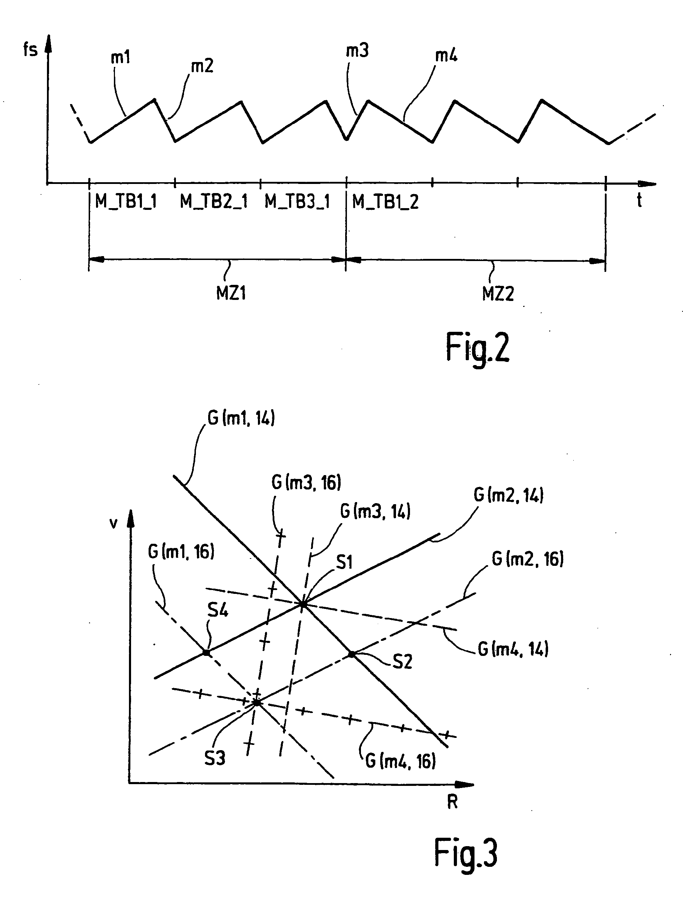

Die Hypothesen werden in einer bevorzugten Ausgestaltung durch ein LFMCW-Verfahren gebildet. Fig. 2 zeigt schematisch den zeitlichen Verlauf der Frequenz fs der vom Radarsystem 12 emittierten Radarsignale in zwei aufeinander folgenden Messzyklen MZ1, MZ2. Dabei wird die Frequenz fs der emittierten Radarsignale für jeden Teilbereich TB1, TB2, TB3 in vorbestimmter Weise moduliert. In der Ausgestaltung der Fig. 2 erfolgt die Modulation so, dass die Frequenz fs im Messzyklus MZ1 für jeden Teilbereich TB1, TB2, TB3 zunächst linear von der Zeit t abhängig mit einer ersten Steigung $dfs/dt = m1$ erhöht und anschließend linear zeitabhängig mit einer zweiten Steigung $dfs/dt = m2$ verringert wird. Dabei kommt es nicht auf die Reihenfolge der Frequenzerhöhung und Frequenzverringerung an.

Jedem Teilbereich TB1, TB2 ist eine Messzeitdauer M_TB1_1, M_TB2_1, M_TB3_1 zugeordnet, in der das Radarsystem 12 reflektierte Radarsignale aus dem jeweils zugehörigen Teilbereich TB1, TB2, TB3 empfängt, wenn sich dort ein oder mehrere reflektierende Objekte 14, 16 befinden. Dabei nummeriert die erste Zahl jeweils den Teilbereich und die zweite Zahl den Messzyklus. Ein Messzyklus entspricht der Zeitdauer, in dem der Erfassungsbereich EB einmal vollständig untersucht worden ist.

Bei den in den Figuren 1 und 2 schematisch skizzierten Verhältnissen ergibt sich bei der Verarbeitung der in dem ersten Messzyklus MZ1 für den ersten Teilbereich TB1 empfangenen Radarsignale für jedes Objekt 14, 16 und jede Steigung m1, m2 je ein Frequenzwert als von der Entfernung r14, 16 und der Geschwindigkeit vr14, vr16 abhängige Differenz zwischen den Frequenzen gesendeter und empfangener Radarsignale. Jeder Differenzfrequenz entspricht je eine Gerade G(m1, 14), G(m2, 14) und G(m1, 16) und G(m2, 16) in einem r, vr -Diagramm, wie es qualitativ in der Fig. 3 dargestellt ist. Die vier Schnittpunkte S1, S2, S3, S4 geben mögliche Wertepaare (R, vr) der beiden Objekte 14, 16 an, von denen aber nur die zwei Wertepaare S1, S3 der Realität entsprechen und von denen die beiden anderen Wertepaare S2, S4 sogenannte Geisterziele sind.

Eine Unterscheidung der realen Wertepaare S1, S3 von den Geisterzielen S2, S4 ist prinzipiell durch weitere Messungen möglich. Würde man zum Beispiel im Teilbereich TB1 im Anschluss an die beiden Frequenzrampen mit den Steigungen m1, m2 noch eine weitere Frequenzrampe mit einer anderen Steigung anschließen, würden sich zwei weitere Geraden für die beiden Objekte 14, 16 und damit weitere Schnittpunkte in der Darstellung der Fig. 3 ergeben. In einer idealisierten Betrachtung würden die weiteren Geraden durch die Schnittpunkte S1, S3 der realen Wertepaare, nicht aber durch die Schnittpunkte S2, S4 der Geisterziele laufen. Die Auswertung der Schnittpunkte der weiteren Geraden mit den übrigen Geraden liefert damit ein Kriterium zur Unterscheidung realer Wertepaare S1, S3 von den Geisterzielen S2, S4.

Im Rahmen der Erfindung erfolgt diese Unterscheidung nicht durch Senden, Empfangen und Auswerten weiterer Frequenzrampen für einen einzelnen Teilbereich TB in einem einzelnen Messzyklus. Stattdessen werden in einem ersten Messzyklus MZ1 Hypothesen für die Entfernungen r14, r16 und Geschwindigkeiten vr14, vr16 reflektierender Objekte 14, 16 gebildet und diese Hypothesen durch Auswertung von Radarsignalen in einem weiteren Messzyklus MZ2 verworfen oder validiert (bestätigt). Die Bildung der Hypothesen erfolgt in einer Ausgestaltung durch die beschriebene Auswertung der resultierenden Differenzfrequenzen bei der Verwendung der beiden Frequenzrampen mit den Steigungen m1 und m2, also durch Ermittlung sämtlicher Schnittpunkte S1 bis S4 einschließlich der Wertepaare der Geisterziele. Diese werden zunächst vom Radarsystem 12 für den Teilbereich TB1 gespeichert. Jeder Schnittpunkt S1, S2, S3, S4 entspricht einer Hypothese für ein mögliches Wertepaar aus einer Entfernung r und einer Relativgeschwindigkeit vr.

Das Radarsystem 12 untersucht dann auf die gleiche Weise die im gleichen Messzyklus MZ1 zu untersuchenden übrigen Teilbereiche TB2, TB3 des Erfassungsbereichs EB. Dabei speichert es gegebenenfalls weitere Hypothesen zu reflektierenden Objekten in diesen übrigen Teilbereichen TB2, TB3 ab.

Wenn dann in einem weiteren Messzyklus MZ2 der erste Teilbereich TB1 erneut untersucht wird, werden die dort erhaltenen Ergebnisse zur Validierung der vorher gebildeten Hypothesen benutzt. Dies erfolgt in einer Ausgestaltung dadurch, dass in dem weiteren Messzyklus MZ2 eine oder mehrere Frequenzrampen mit anderen Steigungen m3, m4 verwendet werden als in dem ersten Messzyklus. Entsprechend ergeben sich weitere Geraden G(m3, 14), G(m3, 16), G(m4, 14) und G(m4, 16) in einem r, vr - Diagramm. Eine solche weitere Gerade G (m3, 14), G/m4, 14), G(m3, 16, G(m4, 16), die in einer erwarteten Nähe eines Schnittpunktes S1, S3 aus einem vorherigen Messzyklus MZ1 verläuft, validiert (bestätigt) die Hypothese, dass es sich bei diesem Schnittpunkt S1, S3 um ein Wertepaar aus einer Entfernung r und einer Geschwindigkeit vr eines realen Objektes 14, 16 handelt. Die weiteren Geraden G(m3, 14), G(m3, 16), G/m4, 14) und G(m4, 16) verlaufen jedoch nicht in der Nähe von Schnittpunkten S2, S4 aus einem vorherigen Messzyklus MZ1. Daher werden diese Schnittpunkt S2, S4 als Geisterziele gewertet.

Um die verschiedenen Geraden G(m1, 14), G (m2, 14), G(m1, 16), G(m2, 16) und G(m3, 14), G(m3, 16), G(m4, 14), G(m4, 16) oder Geradengleichungen, die in den verschiedenen Messzyklen MZ1, MZ2 für einen Teilbereich TB1 erhalten werden, besser voneinander trennen zu können, werden die Werte und Vorzeichen der Steigungen m1, m2, m3, m4 der Frequenzrampen (chirps) in den verschiedenen Messzyklen MZ1, MZ2 aufeinander abgestimmt. Dies erfolgt bevorzugt so, dass Frequenzrampen, deren Steigungen ein gleiches Vorzeichen besitzen, verschiedene Absolutbeträge der Steigungen aufweisen. In einer Ausgestaltung ist m1 gleich 100 GHz/s, m3 gleich 200 Ghz/s, m2 gleich - 200 GHz/s und m4 gleich - 100 Ghz/s.

In der beschriebenen Ausgestaltung wird daher in aufeinander folgenden Messzyklen MZ1, MZ2 abwechselnd ein erstes Paar von Frequenzrampen mit Steigungen m1, m2 und ein zweites Paar von Frequenzrampen mit Steigungen m3, m4 für einen jeweils gleichen Teilbereich, zum Beispiel den Teilbereich TB1, verwendet. Dabei werden die jeweils vier Frequenzmessungen von zwei aufeinander folgenden Messzyklen MZ1, MZ2 zur Hypothesen-Bildung und Hypothesen-Validierung verwendet, wobei die ersten beiden Frequenzmessungen zur Hypothesenbildung und die weiteren beiden Frequenzmessungen zur Validierung benutzt werden.

Mit anderen Worten. Es wird eine optimierte Modulation verwendet, die sich dadurch auszeichnet, dass verschiedene Frequenzrampen auf verschiedene Messzyklen verteilt werden. Die Hypothesen können durch die Messungen in einem beliebigen Messzyklus aufgestellt und durch weitere Messungen im nächsten Zyklus validiert werden. Für die Hypothesenbildung und Validierung können andere Chirp-Parameter, zum Beispiel andere Steigungswerte, verwendet werden. Dadurch wird der Zielkonflikt zwischen einer möglichst langen Dauer einer Einzelmessung und einer möglichst kurzen Dauer eines mehrere Einzelmessungen umfassenden Messzyklusses entschärft. Die Verwendung möglichst vieler unterschiedlicher chirps erhöht die Detektionswahrscheinlichkeit in Situationen mit mehreren Objekten: Da jeder Chirp und jedes Objekt eine Gerade liefert, von der nur ein einzelner Punkt den Objekt-Parametern r und vr entspricht, kann es vorkommen, dass mehrere Objekte trotz unterschiedlicher Objekt-Parameter r und vr ähnliche oder gleiche Differenzfrequenzen im Fourierspektrum des Basisbandsignals und damit die gleiche Gerade im r, vr - Diagramm liefern. Durch die Verwendung möglichst vieler unterschiedlicher chirps können auch Punkte auf derselben Gerade aufgelöst werden, was die Detektionswahrscheinlichkeit in solchen Situationen mit mehreren Objekten erhöht und die Leistungsfähigkeit der Validierung verbessert.

Alternativ zu diesem Verfahren kann die Validierung auch auf mehr als einen Messzyklus gestützt werden, wenn dies zum Beispiel durch eine hohe Zahl von Objekten erforderlich ist.

Weiter alternativ können auch Veränderungen von Paaren festgestellter Kombinationen von Entfernungen und Geschwindigkeiten von Messzyklus zu Messzyklus zur Validierung verwendet werden. Betrachtet man in der Fig. 1 zum Beispiel den Schnittpunkt S1 der Geraden G(m1, 14) und G(m2, 14) in einem ersten Messzyklus, so ergibt sich bei konstanter Relativgeschwindigkeit vr ein Erwartungswert für den Abstand des Objektes 14 zu einem späteren Zeitpunkt (range rate - Verfahren).

Bildet man zu einem späteren Zeitpunkt, also in einem nachfolgenden Messzyklus, erneut den Schnittpunkt der Geraden G(m1, 14) und G(m2, 14) und entspricht der erneut gebildete Schnittpunkt dem vorher unter Berücksichtigung des ersten Abstandes und der ersten Geschwindigkeit gebildeten Erwartungswert, so wird dies als Validierung der Hypothese gewertet. Bei einem Geisterziel würde der erneut gebildete Schnittpunkt dagegen in der Regel nicht dem Erwartungswert entsprechen, was als Widerlegung der Hypothese gewertet wird und den Schnittpunkt als Geisterziel erkennbar macht.

Bei den bisher beschriebenen Ausgestaltungen erfolgt die nach Teilbereichen getrennte Verarbeitung dadurch, dass das Radarsystem 12 eine Teilbereiche definierende Überdeckung einer Sendekeule und eines Empfangswinkelbereiches in einem Messzyklus sequenziell in verschiedene Raumrichtungen richtet und die Verarbeitung empfangener Radarsignale sequenziell erfolgt.

Alternativ oder ergänzend kann die nach Teilbereichen getrennte Verarbeitung auch dadurch erfolgen, dass das Radarsystem gleichzeitig verschiedene Teilbereiche definierende Überdeckungen wenigstens einer Sendekeule mit wenigstens zwei Empfangswinkelbereichen oder wenigstens eines Empfangswinkelbereiches mit wenigstens zwei Sendekeulen in verschiedene Raumrichtungen richtet, wobei für einen Teilbereich Signale aus einem anderen Empfangssignal-Frequenzbereich verarbeitet werden als für einen anderen Teilbereich.

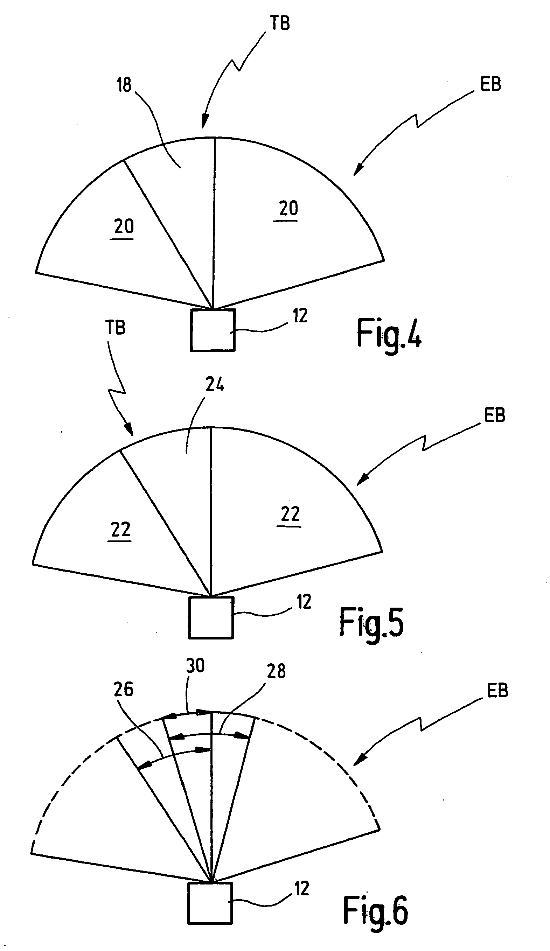

Die Figuren 4 - 6 zeigen verschiedene Möglichkeiten der Realisierung von Überdeckungen oder Teilbereichen. In der Figur 4 liegt eine schmale Sendekeule 18 in einem breiten Empfangswinkelbereich 20 und bildet dadurch eine Überdeckung oder einen Teilbereich TB. Der breite Empfangswinkelbereich 20 entspricht in diesem Fall dem gesamten Erfassungsbereich EB des Radarsystems 12. Im Betrieb des Radarsystems 12 wird der Erfassungsbereich EB in einer Ausgestaltung abschnittsweise durch Versetzen der Sendekeule 18 und damit des Teilbereichs TB abgetastet.

Figur 5 zeigt gewissermaßen eine komplementäre Realisierung, bei der ein Erfassungsbereich EB durch eine breite Sendekeule 22 gebildet wird. Teilbereiche TB werden in diesem Fall durch schmale Empfangswinkelbereiche 24 erzeugt, mit denen die breite Sendekeule 22 abschnittsweise abgetastet wird.

Figur 6 zeigt, wie durch ein Überlappen einer schmalen Sendekeule 26 und eines schmalen Empfangswinkelbereichs 28 eine noch schmalere Überdeckung 30 erzeugt wird, die ebenfalls zur abschnittsweise erfolgenden Abtastung des Erfassungsbereichs EB dient.

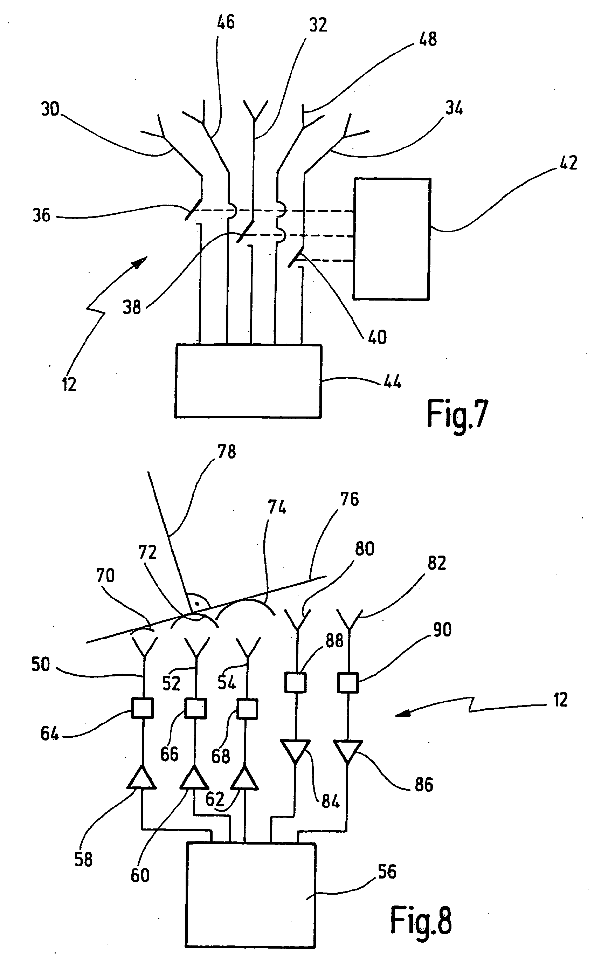

Figur 7 zeigt eine Ausgestaltung eines Radarsystems 12 mit mehreren schaltbaren Sendeantennen 30, 32, 34, die in verschiedene Raumrichtungen weisen und jeweils gerichtete, schmale Sendekeulen erzeugen. Über von einer Steuerung 42 betätigte Schalter 36, 38, 40 werden die Sendeantennen 30, 32, 34 sequenziell mit einer Radarsignal-Generator- und Auswerteeinheit 44 verbunden. Wenigstens eine Empfangsantenne 46 und/oder 48 ist ebenfalls mit der Auswerteeinheit 44 verbunden und erzeugt einen breiten Empfangswinkelbereich, der durch sequenziell erfolgendes Aktivieren der Sendeantennen 30, 32, 34 abschnittsweise abgetastet wird. Die Auswerteeinheit 44 bestimmt aus den reflektierten Signalen die Objektparameter r und vr einschließlich der Validierung durch das oben im Detail beschriebene FMCW-Verfahren.

Schmale Empfangswinkelbereiche 24 werden zum Beispiel durch Verzögern der Empfangssignale von einer der Empfangsantennen bei der Signalverarbeitung erzielt. Bei einer Addition der Empfangssignale ergibt sich ein maximales Summensignal dann, wenn sich Maxima der einzelnen Empfangssignale konstruktiv überlagern. Betrachtet man verschiedene reflektierende Objekte, die, relativ zum Radarsystem in gleicher Entfernung aber verschiedener Winkelposition im Erfassungsbereich des Radarsystems angeordnet sind, ergibt sich die konstruktive Überlagerung für einen bestimmten, vergleichsweise schmalen Winkelbereich.

Figur 8 zeigt eine Ausgestaltung eines Radarsystems 12 mit elektronisch verstellbarer Senderichtung und/oder Empfangsrichtung. Das Radarsystem 12 enthält mehrere Sendeantennen 50, 52, 54, die von einer Radarsignal-Generator- und Auswerteeinheit 56 über Sendeverstärker 58, 60, 62 zur Abstrahlung von Signalen angeregt werden. Dabei erfolgt die Anregung der Sendeantennen 50, 52, 54 phasengekoppelt mit einer von der Einheit 56 steuerbaren Phasenverschiebung. Die Steuerung der Phasenverschiebung erfolgt durch starre oder steuerbare Phasenschieber 64, 66 und 68, die zwischen den Sendeverstärkern 58, 60, 62 und den Sendeantennen 50, 52, 54 angeordnet sind. Als Phasenschieber kommen beispielsweise Leiterabschnitte mit umschaltbarer oder umsteuerbarer Leiterlänge oder steuerbare Zeitverzögerungsschaltungen in Frage, wobei solche Realisierungen hier lediglich als Beispiel dienen sollen und ihre Aufzählung keinen abschließenden Charakter besitzt.

Im Ergebnis strahlen die Sendeantennen 50, 52, 54 phasengekoppelt Wellen 70, 72 und 74 ab, die sich zu Wellenfronten 76 konstruktiv überlagern und als in eine Vorzugsrichtung 78 gerichtete Sendekeule abgestrahlt werden. Die gezeigte Anordnung stellt damit eine Möglichkeit einer Sendekeulen-Erzeugung und einer phasengekoppelten Anregung von mehreren Sendeantennen 50, 52, 54 nach dem sogenannten "Phased Array"-Prinzip dar. Die Breite der resultierenden Sendekeule kann mit zunehmender Zahl der beteiligten Sendeantennen verringert werden. Es versteht sich daher, dass die Zahl der Antennenelemente, die an der Erzeugung einer Sendekeule beteiligt sind, auch größer oder kleiner als 3 sein kann.

In der Ausgestaltung der Figur 8 ist weiter wenigstens eine Empfangsantenne 80 und/oder 82 vorgesehen, die von einem Objekt reflektierte Signale empfängt und an die Auswerteeinheit 56 übergibt. Es versteht sich, dass anstelle separater Empfangsantennen 80 und 82 auch eine Auswahl von Sendeantennen mit nachgeschalteten Sende- und Empfangsweichen für den Empfang reflektierter Signale verwendet werden kann. Zwischen die Empfangsantennen 80 und 82 sind Empfangsverstärker mit niedrigem Rauschanteil (Low Noise Amplifier) 84 und 86 sowie steuerbare Phasenschieber 88, 90 geschaltet, die eine elektronische Schwenkung des Empfangswinkelbereichs erlauben. Die Auswerteeinheit 56 bestimmt aus den reflektierten Signalen die Objektparameter r und vr einschließlich der Validierung durch das oben im Detail beschriebene FMCW-Verfahren.

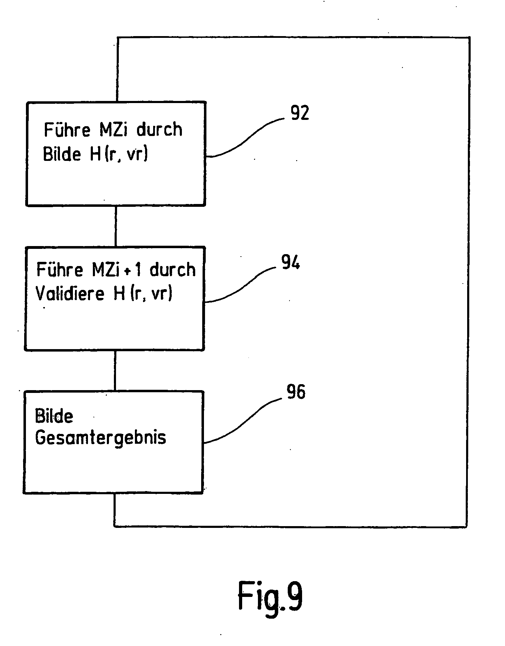

Ein Ausführungsbeispiel eines entsprechenden Verfahrens wird im Folgenden unter Bezug auf die Figur 9 erläutert.

In einem ersten Schritt 92 wird ein erster Messzyklus MZi durchgeführt. Dabei werden gegebenenfalls Hypothesen H(r, vr) für Objektparameter r, vr auf die weiter oben im Detail beschriebene Art gebildet.

Anschließend erfolgt in einem Schritt 94 die Durchführung eines weiteren Messzyklusses MZi+1 und, wenn Hypothesen H(r, vr) aus dem Schritt 92 vorliegen, eine Validierung der Objektparameter r, vr realer Objekte zur Unterscheidung von Geisterzielen.

Daran schließt sich im Schritt 96 ein Zusammenfügen von aus verschiedenen Teilbereichen in den Messzyklen erhaltenen Ergebnissen zu einem nach Raumrichtungen differenzierten Gesamtergebnis an.

**Patentansprüche**

1. Verfahren zur Bestimmung von Geschwindigkeiten (vr14, vr16) und Entfernungen (r14, r16) von Objekten (14, 16) relativ zu einem Radarsystem (12) eines Kraftfahrzeugs (10), wobei ein Erfassungsbereich (EB) des Radarsystems (12) in wenigstens zwei Teilbereiche (TB1, TB2, TB3) aufgeteilt ist, der Erfassungsbereich (EB) in aufeinander folgenden Messzyklen (MZ1, MZ2; MZi, MZi+1) auf reflektierende Objekte (14, 16) untersucht wird, wobei in einem Messzyklus (MZ1, MZ2; MZi, MZi+1) empfangene Radarsignale nach Teilbereichen (TB1, TB2, TB3) getrennt verarbeitet werden und verarbeitete Signale zu einem nach Raumrichtungen differenzierten Gesamtergebnis zusammengefügt werden, und wobei aus in einem ersten Messzyklus (MZ1; MZi) empfangenen Signalen Hypothesen für die Entfernung (r14, r16) und Geschwindigkeit (vr14, vr16) reflektierender Objekte (14, 16) gebildet werden und die Hypothesen in Abhängigkeit von in wenigstens einem weiteren Messzyklus (MZ2; MZi+2) empfangenen Signalen validiert werden, **dadurch gekennzeichnet, dass** die in dem weiteren Messzyklus (MZ2; MZi+2) empfangenen Radarsignale nach Teilbereichen (TB1, TB2, TB3) getrennt verarbeitet werden, wobei die nach Teilbereichen (TB1, TB2, TB3) getrennte Verarbeitung im ersten (MZ1; MZi) und im weiteren Messzyklus (MZ2; MZi+2) jeweils dadurch erfolgt, dass das Radarsystem (12) eine Teilbereiche (TB1, TB2, TB3) definierende Überdeckung einer Sendekeule (18) und eines Empfangswinkelbereiches (20) in einem Messzyklus (MZ1, MZ2; MZi, MZi+1) sequenziell in verschiedene Raumrichtungen richtet und die Verarbeitung empfangener Radarsignale sequenziell erfolgt und wobei der weitere Messzyklus (MZ2; MZi+2) nach Untersuchung sämtlicher Teilbereiche (TB1, TB2, TB3) im ersten Messzyklus (MZ1; MZi) durchgeführt wird.

2. Verfahren nach einem der vorhergehenden Ansprüche, **dadurch gekennzeichnet, dass** die Hypothesen durch ein LFMCW-Verfahren gebildet werden, bei dem pro Teilbereich (TB1, TB2, TB3) zwei Frequenzrampen mit unterschiedlicher Steigung (m1, m2; m3, m4) verwendet werden.

3. Verfahren nach Anspruch 2, **dadurch gekennzeichnet, dass** zur Hypothesenbildung und Validierung wenigstens vier verschiedenen Frequenzrampen benutzt werden, von denen jeweils zwei in einem von zwei verschiedenen Messzyklen liegen.

4. Verfahren nach Anspruch 2 oder 3, **dadurch gekennzeichnet, dass** Veränderungen von Paaren festgestellter Kombinationen (r, vr) von Entfernungen (r) und Geschwindigkeiten (vr) von Messzyklus (MZ1; MZi) zu Messzyklus (MZ2; MZi+1) zur Validierung verwendet werden.

5. Verfahren nach einem der Ansprüche 2 bis 4, **dadurch gekennzeichnet, dass** in aufeinander folgenden Messzyklen (MZ1, MZ2; MZi, MZi+1) abwechselnd ein erstes Paar von Frequenzrampen und ein zweites Paar von Frequenzrampen für jeweils gleiche Teilbereiche verwendet wird.

6. Verfahren nach Anspruch 5, **dadurch gekennzeichnet, dass** die jeweils vier Frequenzmessungen von zwei aufeinander folgenden Messzyklen (MZ1, MZ2; MZi, MZi+1) zur Hypothesen-Bildung und Hypothesen-Validierung verwendet werden, wobei die ersten beiden Frequenzmessungen zur Hypothesenbildung und die weiteren beiden Frequenzmessungen zur Validierung benutzt werden.

7. Verfahren nach Anspruch 5, **dadurch gekennzeichnet, dass** zwei Frequenzen, die in einem ersten Messzyklus (MZ1, MZi) gemessen werden, zur Hypothesen-Bildung verwendet werden und dass Frequenzen, die in mehr als einem weiteren Messzyklus (MZ2; MZi+1) gebildet werden, zur Validierung der Hypothese verwendet werden.

**Claims**

1. Method for determining speeds (vr14, vr16) and distances (r14, r16) of objects (14, 16) relative to a radar system (12) of a motor vehicle (10), wherein a coverage area (EB) of the radar system (12) is divided into at least two part-areas (TB1, TB2, TB3), the coverage area (EB) is examined for reflecting objects (14, 16) in successive measuring cycles (MZ1, MZ2; MZi, MZi+1), wherein radar signals received in a measuring cycle (MZ1, MZ2; MZi, MZi+1) are processed separated in accordance with part-areas (TB1, TB2, TB3) and processed signals are assembled to form a total result differentiated in accordance with spatial directions, and wherein from signals received in a first measuring cycle (MZ1; MZi), hypotheses for the distance (r14, r16) and speed (vr14, vr16) of reflecting objects (14, 16) are formed and the hypotheses are validated in dependence on signals received in at least one further measuring cycle (MZ2; MZi+2), **characterized in that** the radar signals received in the further measuring cycle (MZ2; MZi)+2) are processed separated in accordance with part-areas (TB1, TB2, TB1), wherein the processing separated in accordance with part-areas (TB1, TB2, TB3) in the first (MZ1; MZi) and the further measuring cycle (MZ2; MZi,+2) is respectively carried out **in that** the radar system (12) directs an overlay of a transmitting lobe (18) and of an angular receiving area (20), defining part-areas (TB1, TB2, TB3), sequentially in different spatial directions in one measuring cycle (MZ1, MZ2; MZi), MZi+1) and the processing of received radar signals is carried out sequentially and wherein the further measuring cycle (MZ2; MZi+2) is carried out after examination of all part-areas (TB1, TB2 TB3) in the first measuring cycle (MZ1; MZi).

2. Method according to Claim 1, **characterized in that** the hypotheses are formed by an LFMCW method in which two frequency ramps with different slope (m1, m2; m3, m4) are used for each part-area (TB1, TB2, TB3).

3. Method according to Claim 2, **characterized in that** at least four different frequency ramps, of which two are in each case located in one of two different measuring cycles, are used for forming hypotheses and validation.

4. Method according to Claim 2 or 3 **characterized in that** changes of pairs of found combinations (r, vr) of distances (r) and speeds (vr) from measuring cycle (MZ1; MZi) to measuring cycle (MZ2; MZi+1) are used for the validation.

5. Method according to one of Claims 2 to 4, **characterized in that** in successive measuring cycles (MZ1, MZ2; MZi,, MZi+1), a first pair of frequency ramps and a second pair of frequency ramps are used alternately for in each case identical part-areas.

6. Method according to Claim 5, **characterized in that** the respective four frequency measurements of two successive measuring cycles (MZ1, MZ2; MZi, MZi+1) are used for forming hypotheses and validating hypotheses, wherein the first two frequency measurements are used for forming hypotheses and the further two frequency measurements are used for validation.

7. Method according to Claim 5, **characterized in that** two frequencies which are measured in a first measuring cycle (MZ1, MZi) are used for forming hypotheses and **in that** frequencies which are formed in more than one further measuring cycle (MZ2; MZi+1) are used for validating the hypothesis.

**Revendications**

1. Procédé de détermination de vitesses (vr14, vr16) et de distances (r14, r16) d'objets (14, 16) par rapport à un système radar (12) d'un véhicule automobile (10), dans lequel une région de détection (EB) du système radar (12) est divisée en au moins deux sous-régions (TB1, TB2, TB3), la région de détection (EB) est examinée lors de cycles de mesure consécutifs (MZ1, MZ2 ; MZi, MZi+1) sur des objet réfléchissants (14, 16) dans lequel, lors d'un cycle de mesure (MZ1, MZ2 ; MZi, MZi+1) des signaux radar reçus sont traités de manière séparée en fonction des sous-régions (TB1, TB2, TB3) et des signaux traités sont combinés en un résultat global différencié en fonction de directions spatiales, et dans lequel des hypothèses sont construites à partir de signaux reçus lors d'un premier cycle de mesure (MZ1 ; MZi) en ce qui concerne la distance (r14, r16) et la vitesse (vr14, vr16) d'objets réfléchissants (14, 16) et les hypothèses sont validées en fonction de signaux reçus lors d'au moins un cycle de mesure supplémentaire (MZ2 ; MZi+2), **caractérisé en ce que** les signaux radar reçus lors du cycle de mesure supplémentaire (MZ2 ; MZi+2) sont traités de manière séparés selon des sous-régions (TB1, TB2, TB3), dans lequel le traitement séparé selon les sous-régions (TB1, TB2, TB3) s'effectue respectivement lors du premier cycle de mesure (MZ1 ; MZi) et du cycle de mesure supplémentaire (MZ2 ; MZi+2) de telle manière que le système radar (12) dirige séquentiellement dans diverses directions spatiales lors d'un cycle de mesure (MZ1, MZ2 ; MZi, MZi+1) une recouvrement définissant une sous-région (TB1, TB2, TB3) d'un faisceau d'émission (18) et d'une région angulaire de réception (20) et le traitement de signaux radar reçus s'effectue séquentiellement et dans lequel le cycle de mesure supplémentaire (MZ2 ; MZi+2) est exécuté en examinant la totalité des sous-régions (TB1, TB2, TB3) lors du premier cycle de mesure (MZ1 ; MZi).

2. Procédé selon la revendication 1, **caractérisé en ce que** les hypothèses sont construites par un procédé LFMCW, dans lequel deux rampes de fréquence sont utilisées pour chaque sous-région (TB1, TB2, TB3) avec des pentes différentes (m1, m2 ; m3, m4).

3. Procédé selon la revendication 2, **caractérisé en ce que** pour la construction et la validation d'hypothèses, on utilise au moins quatre rampes de fréquence différentes dont deux se situent dans l'un de deux cycles de mesure différents.

4. Procédé selon la revendication 2 ou 3, **caractérisé en ce que** des modifications de paires de combinaisons établies (r, vr) de distances (r) et de vitesses (vr) sont utilisées d'un cycle de mesure (MZ1 ; MZi) à un cycle de mesure (MZ2 MZi+1) pour la validation.

5. Procédé selon l'une quelconque des revendications 2 à 4, **caractérisé en ce que** lors de cycles de mesure consécutifs (MZ1, MZ2 ; MZi, MZi+1) une première paire de rampes de fréquence et une seconde paire de rampes de fréquence sont utilisées en alternance pour des sous-régions respectives identiques.

6. Procédé selon la revendication 5, **caractérisé en ce que** les quatre mesures de fréquence respectives sont utilisées par deux cycles de mesure consécutifs (MZ1, MZ2 ; MZi, MZi+1) pour la construction d'hypothèses et la validation hypothèses, les deux premières mesures de fréquence étant utilisées pour la construction d'hypothèses et les deux mesures de fréquence supplémentaires étant utilisées pour la validation.

7. Procédé selon la revendication 5, **caractérisé en ce que** deux fréquences qui sont mesurées lors d'un premier cycle de mesure (MZ1, MZi) sont utilisées pour la construction d'hypothèses et **en ce que** des fréquences qui sont construites lors de plus d'un cycle de mesure supplémentaire (MZ2 ; MZi+1) sont utilisées pour la validation de l'hypothèse.

Fig.1

Fig.2

Fig.3

Fig.4

Fig.5

Fig.6

Fig.7

Fig.8

Fig.9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 69612252 T2
- DE 69612252
- DE 2305941
- DE 4244608 A1
- DE 19922411 A1
- DE 69612252 T4
- WO 2006034888 A